# FASCICULE DE BREVET EUROPEEN

(11) **EP 2 084 886 B1**
(45) Date de publication et mention de la délivrance du brevet: **22.01.2014**
(21) Numéro de dépôt: 07866518.9
(22) Date de dépôt: 29.10.2007
(51) Int. Cl.: G03B 29/00, H04N 5/225, G03B 15/03, H04M 1/02

(54) **ACCESSOIRE POUR UN TERMINAL COMMUNIQUANT PORTABLE EQUIPE DE MOYENS DE TRAITEMENT ET D'ACQUISITION D'IMAGES ET ENSEMBLE FORME PAR L'ACCESSOIRE ET LE TERMINAL COMMUNIQUANT**
HILFSEINRICHTUNG FÜR EIN MIT BILDVERARBEITUNG UND BESCHAFFUNGSMITTELN AUSGESTATTETES TRAGBARES KOMMUNIKATIONSENDGERÄT UND DURCH DIE HILFSEINRICHTUNG UND DAS KOMMUNIKATIONSENDGERÄT GEBILDETE BAUGRUPPE
ACCESSORY FOR A PORTABLE COMMUNICATING TERMINAL PROVIDED WITH IMAGE PROCESSING AND ACQUIRING MEANS, AND ASSEMBLY FORMED BY THE ACCESSORY AND THE COMMUNICATING TERMINAL

(30) Priorité: 31.10.2006 FR 0654682
(43) Date de publication de la demande: 05.08.2009
(73) Titulaire: Signoptic Technologies, 73370 le Bourget du Lac (FR)
(72) Inventeur: BOUTANT, Yann, F-73310 Chindrieux (FR)
(74) Mandataire: Blanchard, Eugène Gilles
(86) Numéro de dépôt international: PCT/FR2007/052276
(87) Numéro de publication internationale: WO 2008/053121

(56) Documents cités:
- EP-A- 1 276 309
- JP-A- 2004 120 340
- US-A1- 2003 036 365
- US-A1- 2003 118 340
- US-A1- 2006 125 929

## Description

La présente invention concerne le domaine technique des accessoires destinés à être adaptés sur des terminaux communiquant portables afin de les rendre aptes à la mise en oeuvre de fonctions spécifiques.

La présente invention se rapporte plus particulièrement aux accessoires destinés à être utilisés en combinaison avec des terminaux communicants portables équipés de moyens de traitement et d'acquisition d'images tels que par exemple des téléphones intelligents, appelés en anglais « smartphones », équipés de caméras ou d'appareils photo ou encore des assistants électroniques personnels, appelés en anglais « PDA » également équipés de caméras ou d'appareils photo.

De tels terminaux communicants portables constituent des moyens relativement peu onéreux d'acquérir des images qui sont généralement considérées comme étant de qualité moyenne, voire basse, en raison de la résolution des capteurs utilisés. Cependant, malgré cette réputation de basse qualité des images obtenues avec les caméras ou appareils photo intégrés dans des téléphones mobiles ou des assistants numériques personnels, les inventeurs ont eu le mérite de démontrer qu'il était possible d'obtenir avec ces dispositifs des images d'une qualité suffisante pour permettre une analyse de la structure géométrique microscopique ou submillimétrique de matériaux ou de produits divers afin de pouvoir, notamment, mettre en oeuvre des procédés d'extraction de signatures ou de caractéristiques physiques et des procédés de mise en oeuvre de ces signatures tels que décrits, par exemple, dans les demandes FR2866139, WO200578651, US2005262350, FR2870376.

Toutefois, les appareils photo ou caméras équipant les téléphones intelligents ou les assistants électroniques personnels sont généralement conçus pour effectuer des portraits, des photos de paysages ou encore des photos de l'intérieur, de sorte que leur système optique possède une distance focale fixe permettant d'obtenir une bonne mise au point pour des distances de l'ordre du mètre ou supérieures au mètre. Or, une telle distance focale est inadaptée pour des prises de vues rapprochées ou des prises de vue appelées macroscopiques.

Par ailleurs, les téléphones intelligents ou les assistants numériques personnels équipés d'appareils photo ne comprennent que très rarement des sources de lumière adaptées à la photo et, dans l'hypothèse où ils en sont équipés, ces sources de lumière sont constituées par des flashs adaptés pour illuminer des scènes relativement éloignées et totalement inadaptées pour des prises de vue rapprochées.

Ainsi, il est apparu le besoin de moyens de rendre facilement les téléphones intelligents ou les assistants numériques équipés de systèmes de prises de vue, appareils photo ou caméras, utilisables pour obtenir des images de détails microscopiques ou submillimétriques de produits divers.

Afin d'atteindre cet objectif, l'invention concerne un accessoire pour un terminal communicant portable équipé de moyens de traitement et d'acquisition d'images au travers d'au moins un système optique, comprenant les caractéristiques définies dans la rev. indépendante 1.

La mise en oeuvre d'un tel accessoire permet, en combinaison avec le terminal communicant portable, de réaliser de manière simple un dispositif adapté pour assurer des acquisitions d'images, d'objets ou sujets situés à proximité immédiate du système optique et dans la zone couverte par les moyens d'éclairage.

Selon une caractéristique de réalisation, l'accessoire comporte des moyens pour conditionner l'éclairage comportant au moins un passage présenté par le tube d'acquisition, pour les rayons lumineux provenant de l'environnement extérieur à l'accessoire.

Selon une variante de réalisation de l'accessoire conforme à l'invention, les moyens d'alimentation des moyens pour conditionner l'éclairage comprennent au moins un accumulateur et/ou une pile électrique. Cette caractéristique permet de conférer une certaine autonomie à l'accessoire qui peut alors éclairer les sujets devant faire l'objet d'une acquisition sans apport d'énergie extérieure à l'accessoire et évite ainsi notamment de devoir prélever l'énergie sur la batterie du terminal communicant.

Selon une autre caractéristique de l'invention, l'accessoire comprend des moyens d'ajustement optique destinés à coopérer avec le système optique du terminal communicant. La mise en oeuvre de tels moyens d'ajustement optique peut notamment s'avérer nécessaire lorsque le système optique du terminal communicant n'est pas adapté pour assurer une mise au point à distance réduite inférieure, par exemple, à 100 mm.

Selon l'invention, les moyens d'ajustement optique possèdent alors une distance focale fixe ou variable. Dans le cas de moyens d'ajustement optique à distance focale variable, les moyens d'ajustement optique peuvent comprendre une lentille à focale variable, telle que, par exemple, développée et commercialisée par la société Varioptic dans le cas d'une lentille sans pièce mécanique mobile ou par la société PGS dans le cas d'une lentille à contrainte mécanique.

Dans le cas les moyens d'ajustement optique possèdent une distance de focale variable, le réglage de la distance focale pourra soit être effectué une fois pour toutes en atelier par exemple avant commercialisation de l'accessoire, soit au contraire être réalisé en cours d'utilisation à chaque prise de vue par exemple. Dans ce dernier cas, l'accessoire selon l'invention pourra être équipé de moyens de réglage automatique de la distance focale. Dans une variante de réalisation, le réglage de la distance focale sera contrôlé par le terminal communicant portable adapté sur l'accessoire selon l'invention.

Selon encore une autre caractéristique de l'invention visant à faciliter l'opération d'acquisition en permettant d'obtenir une distance fixe entre le sujet et le système optique pendant toute la séquence d'acquisition, l'accessoire comprend des moyens d'appui sur un sujet devant faire l'objet d'une acquisition au travers de la fenêtre d'acquisition. Les moyens d'appui pourront alors avoir une position fixe ou au contraire une position réglable permettant un réglage de la distance entre le système optique du terminal communicant portable et le sujet.

Selon une autre caractéristique de l'invention, la fenêtre d'acquisition est délimitée par un tube ou canal d'acquisition dont une première extrémité est destinée à être placée en relation avec le système optique et dont la deuxième extrémité est destinée à être placée en relation avec un sujet devant faire l'objet d'une acquisition. Une telle forme de réalisation de la fenêtre d'acquisition permet de définir avec le tube, dont une extrémité est en relation avec le système optique du terminal communicant et l'autre avec le sujet ou la partie du sujet à photographier ou filmer, une sorte de chambre d'acquisition permettant d'obtenir une meilleure maîtrise de l'éclairage de la zone du sujet devant faire l'objet de l'acquisition. Selon l'invention, cette chambre d'éclairage n'est pas nécessairement étanche à la lumière extérieure, bien qu'il soit également possible de prévoir des moyens permettant d'obtenir une telle étanchéité, comme par exemple, d'une part, un système de joint venant en appui contre le terminal communicant autour de son système optique et, d'autre part, une lèvre ou un joint destinés à venir en appui contre la surface du sujet.

Selon un exemple non limitatif d'utilisation, la deuxième extrémité du tube ou du canal d'acquisition est associée à des moyens d'appui sur le sujet, ces moyens d'appui assurant ou non une étanchéité à la lumière comme cela a été dit ci-dessus.

Les moyens pour conditionner l'éclairage équipant l'accessoire selon l'invention peuvent être réalisés de toute façon appropriée. Ainsi, les moyens pour conditionner l'éclairage peuvent émettre de la lumière, par exemple, de façon ponctuelle, diffuse ou encore simuler une source de lumière annulaire. Les moyens pour conditionner l'éclairage peuvent également émettrent des rayons lumineux selon différentes incidences ou combinaison d'incidences.

Selon une caractéristique de l'invention, l'accessoire comprend des moyens pour interposer un sujet devant faire l'objet d'une acquisition entre les moyens pour conditionner l'éclairage et la fenêtre d'acquisition.

Selon une autre caractéristique de l'invention, les moyens pour conditionner l'éclairage comprennent au moins une source de lumière et des moyens de guidage ou de diffusion de la lumière émise par la source de lumière. Les moyens de guidage de la lumière peuvent alors être adaptés pour émettre des rayons lumineux éclairant la région d'acquisition selon une direction sensiblement parallèle à un axe optique ou focal du système optique du terminal communicant.

Les moyens de guidage de la lumière peuvent également être adaptés pour émettre des rayons lumineux éclairant la région d'acquisition selon une direction oblique ou perpendiculaire à un axe optique ou focal du système optique du terminal communicant.

Par ailleurs, la lumière utilisée pour assurer l'illumination du sujet peut être de différentes natures. Ainsi, selon une caractéristique de l'invention, les moyens pour conditionner l'éclairage comprennent au moins une source de lumière ou une combinaison de sources de lumière choisies parmi :
■ les sources d'ultraviolets,
■ les sources infrarouges,
■ les sources de lumière blanche,
■ les sources de lumière visible colorée.

Selon l'invention, la lumière émise par les moyens pour conditionner l'éclairage peut être cohérente du type laser, par exemple, ou incohérente du type lumière blanche, par exemple, selon les applications envisagées. Bien entendu, les moyens pour conditionner l'éclairage peuvent être adaptés pour, à la demande de l'utilisateur ou en fonction de commandes reçues du terminal communicant portable, émettre soit une lumière cohérente, soit une lumière incohérente ou encore faire fonctionner de façon simultanée une source de lumière incohérente et une source de lumière incohérente pouvant par exemple avoir des longueurs d'onde différentes.

Selon une autre caractéristique de l'invention, l'accessoire comprend au moins une interface de connexion au terminal communicant. Une telle interface de connexion peut, par exemple, être utilisée pour permettre à la batterie équipant éventuellement l'accessoire selon l'invention d'alimenter le terminal communicant portable. Cette interface peut également être utilisée pour permettre au terminal communicant de piloter le fonctionnement des moyens pour conditionner l'éclairage ou encore la mise au point assurée par les moyens d'adaptation optique de l'accessoire.

Selon encore une caractéristique de l'invention, l'accessoire comprend des moyens de communication avec le terminal communicant portable. Ces moyens de communication peuvent alors être filaires, optique ou radio. Comme l'interface de connexion, les moyens de communication peuvent être utilisés pour permettre, notamment, au terminal communicant de piloter le fonctionnement des moyens pour conditionner l'éclairage ou encore la mise au point assurée par les moyens d'adaptation optique de l'accessoire.

L'invention concerne également un ensemble qui comprend un terminal communicant portable équipé de moyens de traitement et d'acquisition d'images au travers d'au moins un système optique, ainsi qu'un accessoire selon l'invention comme définit dans la rev. indépandante 13.

Selon une caractéristique de l'invention, cet ensemble est adapté pour assurer la lecture de marquages sur un sujet et/ou pour assurer l'acquisition de caractéristiques géométriques et/ou physiques submillimétriques de ce sujet placé à une distance du système optique inférieur à 50 mm et de préférence inférieure à 30 mm Selon une autre caractéristique de l'invention, l'ensemble est adapté pour assurer la lecture de marquage sur un sujet et/ou l'acquisition de caractéristiques géométriques et/ou physiques de ce sujet placé à une distance du système optique inférieure à 20 mm et de préférence comprise entre 5 mm et 20 mm.

Selon l'invention, le terme marquage désigne, notamment, un ou plusieurs signes imprimés sur un sujet comme, par exemple, un code à barres à une dimension ou un code à deux dimensions tel qu'un code du type datamatrix. Le terme marquage désigne également un ou plusieurs signes susceptibles d'être réalisés en surface ou en profondeur sur un sujet par différentes techniques telles que, par exemple, gravure ou microgravure, embossage, microperforation.

Bien entendu, les différentes caractéristiques de l'invention évoquées ci-dessus peuvent être mises en oeuvre les unes avec les autres selon différentes combinaisons lorsqu'elles ne sont pas incompatibles ou exclusives les unes des autres.

Par ailleurs, diverses autres caractéristiques de invention ressortent de la description faite ci-dessous en référence aux dessins annexés qui montrent, à titre d'exemples non limitatifs, des formes de réalisation de l'objet de l'invention.

La **fig. 1** est une perspective schématique partiellement arrachée d'un ensemble comprenant un accessoire selon l'invention et un terminal portable communicant qui est équipé de moyens de traitement et d'acquisition d'images au travers d'au moins un système optique et qui est adapté sur l'accessoire selon l'invention.

La **fig. 2** est une perspective schématique partiellement arrachée de l'accessoire, illustré à la **fig. 1****,** seul.

La **fig. 3** est un exemple d'une image fortement agrandie d'une acquisition d'une région d'un sujet comprenant un marquage réalisé sur un support fibreux comme du papier ou du carton, cette acquisition ayant été effectuée au moyen d'un ensemble, tel qu'illustré à la **fig. 1****,** comprenant un accessoire selon l'invention et un terminal portable communicant.

La **fig. 4** est une coupe schématique longitudinale montrant une variante de réalisation de l'accessoire selon l'invention en association avec un terminal portable communicant.

La **fig. 5** est une coupe schématique analogue à la **fig. 4** montrant une autre variante de réalisation de l'accessoire selon l'invention en association avec un terminal portable communicant.

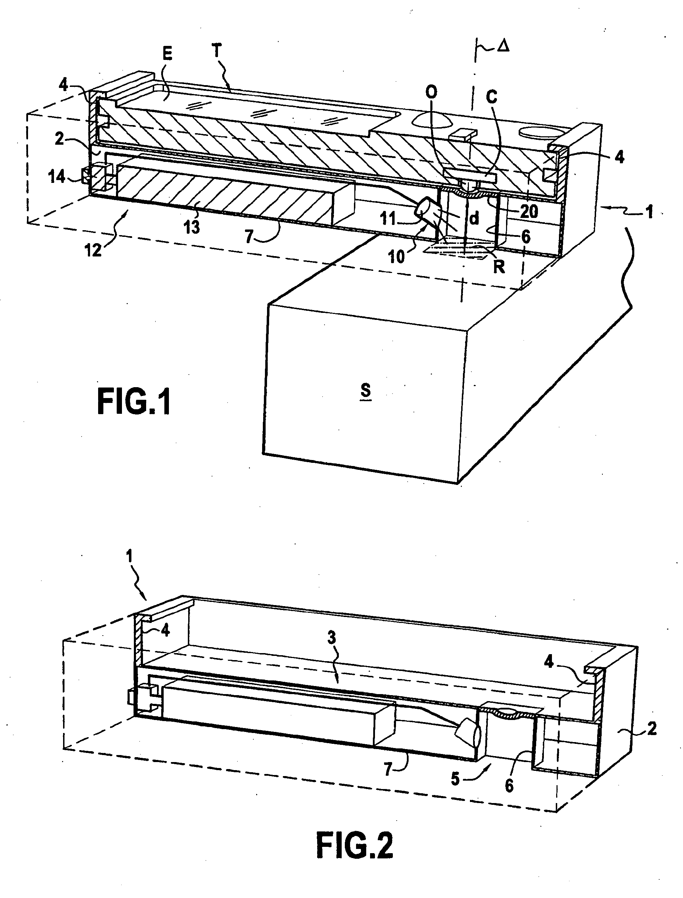

Un accessoire, selon l'invention, tel qu'illustré schématiquement à la **fig. 1** et désigné dans son ensemble par la référence 1, est destiné à être utilisé en association avec un terminal communicant portable **T** équipé de moyens de traitement et d'acquisition d'images **C** au travers d'un système optique **O.** Les moyens de traitement et d'acquisition d'images **C** comprennent, par exemple, un ou plusieurs capteurs de type CCD, CMOS ou analogue raccordé à unité de traitement et/ou de calcul.

Au sens de l'invention, un terminal communicant portable équipé de moyens de traitement et d'acquisition d'images correspond notamment à un téléphone intelligent intégrant un appareil photo ou une caméra ou encore un assistant numérique personnel intégrant également un appareil photo ou une caméra.

L'accessoire **1** selon l'invention comprend un corps **2** qui comprend, selon l'exemple illustré et comme cela ressort plus particulièrement de la **fig.2****,** une face d'accueil **3** du terminal communicant portable **T.** La face d'accueil **3** est alors associée à des moyens **4** de fixation du corps **2** sur le terminal **T.** Selon l'invention, les moyens de fixation **4** peuvent être réalisés de toute manière appropriée et, selon l'exemple illustré, les moyens de fixation **4** sont formés par des pattes rigides recourbées qui définissent en relation avec le corps **2** et sa face d'accueil **3** un logement de réception pour le terminal **T.**

Afin d'autoriser une mise en oeuvre des moyens d'acquisition d'images **C** du terminal **T,** une fenêtre d'acquisition **5** est aménagée dans le corps **2** et placée de manière à se trouver en regard du système optique **O** du terminal **T** lorsque l'accessoire **1** est fixé sur ce dernier comme le montre la **fig. 1****.** Selon l'exemple illustré, la fenêtre d'acquisition **5** est délimitée par un tube ou canal d'acquisition **6** aménagé dans le corps **2** et débouchant au niveau d'une face **7** du corps **2** à l'opposé de la face d'accueil **3.** La face **7** constitue alors un moyen d'appui sur un sujet **S** tel que, par exemple, un produit devant faire l'objet d'une opération d'authentification.

L'accessoire **1** comprend en outre des moyens **10** pour conditionner un éclairage adaptés pour illuminer une région d'acquisition **R** s'inscrivant dans le champ d'acquisition du système optique **O** au travers de la fenêtre d'acquisition **5.** Ces moyens de conditionnement de l'éclairage **10** peuvent être réalisés de toute manière appropriée et comprennent, dans l'exemple illustré, au moins une source de lumière **11** qui, selon l'exemple, est placée au niveau d'une des parois du canal d'acquisition **6** de manière à émettre des rayons lumineux **15** qui possèdent une direction oblique ou perpendiculaire à l'axe optique Δ du système optique **O.** La nature de la lumière émise par la source lisse sera choisie en fonction de l'application, ainsi il pourra être envisagé d'utiliser une source de lumière choisie par exemple parmi :
■ les sources d'ultraviolets,
■ les sources infrarouges,
■ les sources de lumière blanche,
■ les sources de lumière visible colorée.

La source de lumière pourra alors émettre une lumière cohérente ou une lumière incohérente choisies en fonction des applications. Il peut également être envisagé d'utiliser en tant que source de lumière un laser.

L'énergie nécessaire au fonctionnement des moyens pour conditionner l'éclairage **10** est fournie par des moyens d'alimentation **12** qui comprendront de manière avantageuse au moins un accumulateur électrique **13** de préférence rechargeable.

L'accessoire selon l'invention comprend également des moyens de commande **14** des moyens pour conditionner l'éclairage **10.**

L'accessoire selon l'invention ainsi constitué est donc destiné à être adapté sur le terminal portable communicant **T** de manière à constituer un ensemble particulièrement adapté pour des prises de vue rapprochées d'une partie au moins de la surface du sujet **S.** A cet effet, l'ouverture du canal d'acquisition **6** située au niveau de la face **7** est placée au contact du sujet **S.** Le corps **2** et le canal **6** sont alors conçus de manière que la distance **d** entre le système optique **O** et le sujet **S** soit inférieure à 50 mm et de préférence inférieure à 30 mm. Dans une forme plus particulièrement préférée, les moyens d'appui formés par la face **7** sont conçus pour que la distance soit inférieure à 20 mm et de préférence comprise entre 5 mm et 20 mm. En d'autres termes, le canal **6** possède une hauteur **d** inférieure à 50 mm, et de préférence inférieure à 30 mm et avantageusement comprise entre 5 mm et 20 mm.

Si le système optique **O** équipant le terminal **T** n'est pas adapté pour permettre une mise au point à une telle distance réduite, l'accessoire selon l'invention comprendra alors des moyens d'ajustement optique **20** destinés à coopérer avec le système optique **O** pour permettre au moyen de traitement et d'acquisition d'images **C** d'obtenir au moins une image de la surface du sujet **S.**

Les moyens d'ajustement optique **20** peuvent être réalisés de toute façon appropriée et, par exemple, comprendre une lentille de focale fixe corrigeant la distance de mise au point minimale du système optique **O.** Bien entendu, les moyens d'ajustement **20** pourraient comprendre également un ensemble de lentilles pour former soit un système à focale fixe, soit un système à focale variable.

Lorsqu'une l'image doit être réalisée de la surface du sujet **S,** l'utilisateur allume les moyens pour conditionner l'éclairage **10** par l'intermédiaire des moyens de commande **14.** L'utilisateur peut alors déclencher au niveau du terminal **T** une séquence d'acquisition ou de prises de vue. Il doit être remarqué que le canal d'acquisition **6** forme alors en combinaison avec le terminal **T** et le sujet **S** une sorte de chambre d'acquisition permettant des conditions d'illumination optimales par les moyens pour conditionner l'éclairage **10** de la surface du sujet **S** dans la mesure où, même si la chambre d'acquisition n'est pas parfaitement étanche à la lumière extérieure, elle en limite les perturbations.

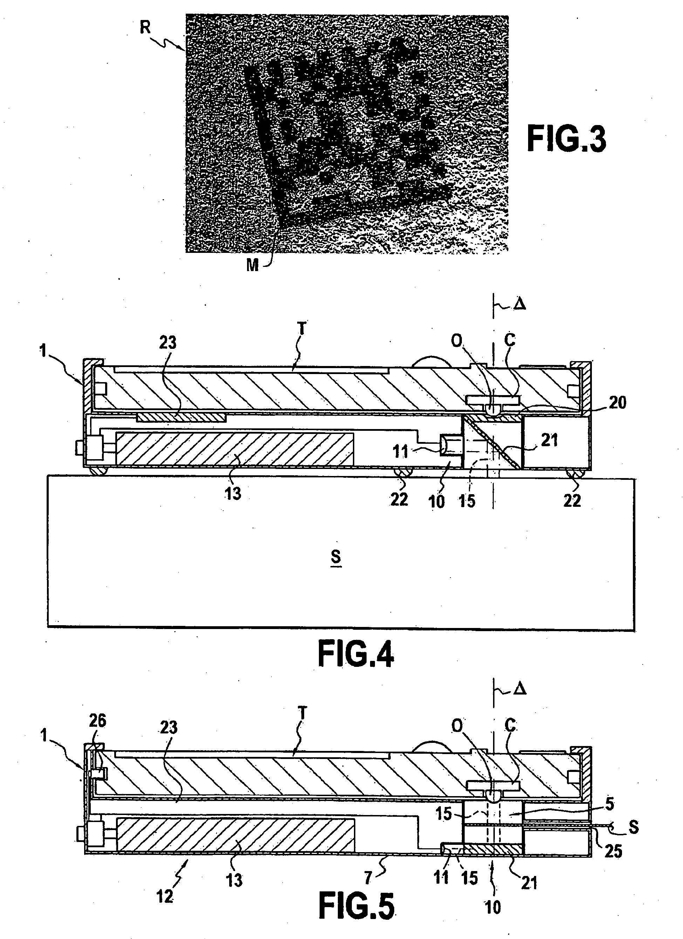

L'écran **E** du terminal **T** peut être utiliser pour prévisualiser la région observable par les moyens d'acquisition **C** de manière à placer la fenêtre **6** en relation avec la région d'intérêt **R** qui peut par exemple comprendre un marquage **M** imprimé sur un support fibreux comme cela est illustré à la **fig. 3****.**

Selon les applications envisagées, le terminal **T** peut être adapté pour, par exemple, assurer certaines ou l'ensemble des opérations suivantes après l'acquisition ou la prise de vue.

Le terminal **T** peut par exemple décoder le marquage **M** pour en extraire des informations qui pourront être utilisées dans un processus ultérieur. L'ensemble accessoire **1**/terminal **T** selon l'invention possédant une certaine capacité de grossissement le marquage **M** peut alors être réalisé pour s'inscrire dans un carré de coté inférieur à 10 mm voire 5 mm de sorte qu'il n'est pas possible de distinguer, à l'oeil nu et à une distance de l'ordre 30 cm les zones noires des zones blanches qui le composent. Les informations du marquage **M** peuvent alors être utilisées pour être comparées avec des informations d'une base de données enregistrée dans le terminal **T** pour, par exemple, faire une identification ou une mise en relation.

Si le terminal **T** intègre des fonctionnalités de communication et de connexion à un réseau de communication et à un système informatique externe, les informations issues du marquage **M** pourront être transmise via le réseau au système informatique externe. Il est également possible envoyer, via le réseau, l'image acquise brute, sans traitement préalable visant à en extraire des informations ou une signature, au système informatique externe.

Si le terminal **T** intègre des fonctionnalités de localisation de type GPS et/ou d'horodatage, l'acquisition brute et/ou les informations extraites de l'acquisition pourront être associées aux coordonnées géographiques du lieu d'acquisition et/ou à la date et l'heure d'acquisition.

Dans le cadre d'une mise oeuvre visant à assurer l'authentification d'objets, le terminal **T** peut par exemple être adapté pour extraire de l'acquisition à la fois des informations contenues dans le marquage et une signature numérique de la matière portant le marquage. Les informations et la signature peuvent alors être comparées à des informations et des signatures stockées dans une base de données enregistrée dans le terminal **T** ou dans une base de données distante. Les signatures présentes dans de telles bases de données peuvent alors avoir été extraites soit par un système distinct de l'ensemble accessoire/terminal selon l'invention tel qu'un système industriel, soit au contraire par un système analogue ou identique à l'ensemble selon l'invention voire par le même ensemble.

Dans le cadre de certaine applications, l'ensemble accessoire/terminal peut être utilisé pour extraire d'un sujet donné une signature numérique liée au caractère aléatoire de la géométrie de sa structure observée à l'échelle submillimétrique. Cette signature peut ensuite être transmise à un système externe qui pourra identifier le sujet lorsque ce dernier lui sera présenté en comparant par exemple la signature reçue à une nouvelle signature extraite.

Dans le cadre d'application d'authentification faisant par exemple intervenir un marquage contenant des informations codées au moyen d'une clef de chiffrement constituée par une signature numérique extraite à partir de la structure du support du marquage, l'ensemble accessoire/terminal pourra être adapté assurer, de manière autonome, une lecture du marquage, une extraction de la signature du support et un décodage des informations du marquage au moyen de la clef constituée par la signature numérique. La nature des informations décodées attestera alors de l'authenticité du support.

Bien entendu, l'ensemble accessoire/terminal selon l'invention peut également être adapté pour assurer tout ou partie des processus ou opérations décrits dans les demandes FR 2 866139, WO2005/78651, US2005262350, FR 2 870 376, FR 05 13231 et FR 06 01342 incorporées par référence.

Par ailleurs, il est possible d'envisager différentes variantes de l'accessoire en fonction de l'utilisation qui sera faite de ensemble constitué par l'accessoire **1** et le terminal communiquant portable **T** qu'il équipe.

Ainsi, la **fig. 4** montre une variante de réalisation de l'accessoire **1** selon laquelle les moyens pour conditionner l'éclairage **10** comprennent des moyens **21** de guidage ou de diffusion de la lumière émise par la source lumineuse **11.** Selon l'exemple illustré, les moyens de guidage de la lumière comprennent un miroir semi-transparent **21** placé de manière que les rayons lumineux **15** émis par la source **11** arrivent sur la surface du sujet **S** en ayant une direction sensiblement parallèle à l'axe Δ du système optique **O.** Selon cette variante de réalisation, l'accessoire comprend en outre des pieds **22** en tant que moyens d'appui sur le sujet **S.** De plus, afin de permettre une communication entre l'accessoire **1** et le terminal **T,** l'accessoire est également équipé de moyens de communication **23** tels que, par exemple, une interface de communication radio WIFI ou Bluetooth ®. Il pourrait également être envisagé que les moyens de communication **23** fonctionnent par infrarouges.

La **fig. 5** illustre une autre variante de réalisation de l'accessoire **1** selon laquelle les moyens pour conditionner l'éclairage **10** sont adaptés pour émettre des rayons lumineux en direction de la fenêtre d'acquisition et plus particulièrement du système optique **O.** A cet effet et, selon l'exemple illustré, les moyens pour conditionner l'éclairage **10** comprennent des moyens de guidage **21** adaptés pour renvoyer parallèlement à l'axe Δ, et vers le système optique **O,** les rayons lumineux **15** émis par la source **11** perpendiculairement à l'axe A. L'accessoire **1** comprend alors des moyens **25,** tels que, par exemple, un guichet ou une fente, pour interposer un sujet **S** entre les moyens pour conditionner l'éclairage **10** et la fenêtre d'acquisition ou le système optique **O.** Une telle configuration permet de procéder à une acquisition par transmission ou transparence du sujet **S** pouvant être, par exemple, une feuille de papier. Le guichet **25** débouche à l'intérieur du tube 6 à un niveau déterminé considéré comme la deuxième extrémité en opposition avec la première extrémité placée en relation avec le système optique **O.**

Selon cet exemple, l'accessoire comprend également une interface **26** de connexion au terminal communiquant **T.** Cette interface de connexion **26** peut alors posséder diverses fonctions et, par exemple, permettre à l'accumulateur **13** d'alimenter le terminal communiquant **T** ou, inversement, au terminal communiquant d'alimenter les moyens pour conditionner l'éclairage **10.** Selon la variante illustrée à la **fig. 5****,** l'accessoire **1** ne comprend pas de moyens d'adaptation optique. Toutefois, l'accessoire **1** pourrait en être équipé, et dans l'éventualité de moyens d'adaptation optique à focale variable, l'interface de connexion pourrait être adaptée pour permettre au terminal **T** de piloter des moyens d'adaptation optique pour assurer la mise au point nécessaire à une parfaite acquisition.

Dans les différentes variantes de réalisation décrites ci-dessus, les moyens pour conditionner l'éclairage **10** sont portés par l'accessoire car la source d'éclairage fait partie de l'accessoire. Il est à noter qu'il peut être prévu une variante de réalisation pour laquelle la source d'éclairage fait partie de l'environnement extérieur à l'accessoire. En d'autres termes, la source d'éclairage correspond à la lumière ambiante dans laquelle sont placés l'accessoire et le portable communicant **T.** Selon cette variante, les moyens pour conditionner l'éclairage **10** comporte au moins un passage, fenêtre ou ouverture pour les rayons, aménagé sur le tube d'acquisition **6.** Par exemple, il peut être prévu de réaliser, dans le tube d'acquisition **6,** une fenêtre traversante s'étendant parallèlement à l'axe Δ permettant le passage des rayons lumineux provenant de l'environnement extérieur au tube d'acquisition.

Bien entendu, diverses autres modifications peuvent être apportées à l'accessoire pour terminal communiquant portable sans sortir du cadre de la présente invention.

## Revendications

1. Accessoire pour un terminal communicant portable (**T**) équipé de moyens (**C**) de traitement et d'acquisition d'images au travers d'au moins un système optique (**O**), **caractérisé en ce qu'**il comprend un corps (**2**) présentant une face extérieure d'accueil (**3**) pour le terminal communicant portable (**T**) et une face extérieure (**7**) d'appui, située à l'opposé de la face d'accueil (**3**), le corps (**2**) comportant :
■ des moyens (**4**) de fixation du corps (**2**) sur le terminal communicant (**T**),
■ un tube d'acquisition (**6**) aménagé dans le corps (**2**) pour délimiter selon la section du tube d'acquisition (**6**) une fenêtre d'acquisition (**5**), le tube d'acquisition (**6**) présentant au niveau de la face d'accueil (**3**), une première extrémité placée en relation avec le système optique (**O**), le tube d'acquisition (**6**) présentant une deuxième extrémité située au niveau de la face d'appui (**7**) ou à un niveau déterminé du tube et destinée à être placée en relation avec une région d'acquisition (**R**) d'un sujet (**S**) devant faire l'objet d'une acquisition d'image et des moyens (**10**) placés au niveau d'une des parois du tube d'acquisition (**6**) pour conditionner un éclairage illuminant la région d'acquisition (**R**) s'inscrivant dans le champ d'acquisition du système optique au travers de la fenêtre d'acquisition (**5**),
■ des moyens d'ajustement optique (**20**) destinés à coopérer avec le système optique du terminal communicant.

2. Accessoire selon la revendication 1, **caractérisé en ce que** les moyens (**10**) pour conditionner l'éclairage comportent au moins un passage présenté par le tube d'acquisition (**6**), pour les rayons lumineux provenant de l'environnement extérieur à l'accessoire.

3. Accessoire selon la revendication 1, **caractérisé en ce qu'**il comprend des moyens d'alimentation (**12**) et de commande (**14**) pour les moyens pour conditionner l'éclairage (**10**) portés par l'accessoire.

4. Accessoire selon la revendication 3, **caractérisé en ce que** les moyens d'alimentation (**12**) des moyens pour conditionner un éclairage (**10**) comprennent au moins un accumulateur (**13**) et/ou une pile électrique.

5. Accessoire selon la revendication 1, **caractérisé en ce que** les moyens d'ajustement optique (**20**) possèdent une distance focale variable.

6. Accessoire selon la revendication 1, **caractérisé en ce que** les moyens d'ajustement optique (**20**) comprennent une lentille à focale variable.

7. Accessoire selon l'une des revendications 1 à 6, **caractérisé en ce qu'**il comprend des moyens d'appui (**7,22**) sur un sujet (**S**) devant faire l'objet d'une acquisition au travers de la fenêtre d'acquisition (**5**).

8. Accessoire selon l'une des revendications 2 à 7, **caractérisé en ce qu'**il comprend des moyens (**25**) pour interposer un sujet (**S**) devant faire l'objet d'une acquisition entre les moyens pour conditionner l'éclairage (**10**) et la fenêtre d'acquisition (**5**).

9. Accessoire selon l'une des revendications 2 à 8, **caractérisé en ce que** les moyens pour conditionner l'éclairage (**10**) comprennent au moins une source de lumière (**11**) et des moyens (**21**) de guidage (**2**) ou de diffusion de la lumière émise par la source de lumière.

10. Accessoire selon la revendication 9, **caractérisé en ce que** les moyens de guidage (**21**) de la lumière sont adaptés pour émettre des rayons lumineux (**12**) éclairant la région d'acquisition selon une direction sensiblement parallèle à un axe optique Δ ou focal du système optique (**O**) du terminal communicant (**T**).

11. Accessoire selon l'une des revendications 1 à 9, **caractérisé en ce que** les moyens de guidage (**21**) de la lumière sont adaptés pour émettre des rayons lumineux (**15**) éclairant la région d'acquisition selon une direction oblique ou perpendiculaire à un axe optique Δ ou focal du système optique (**O**) du terminal communicant (**T**).

12. Accessoire selon l'une des revendications 1 à 11, **caractérisé en ce qu'**il comprend au moins une interface (**26**) de connexion au terminal communicant (**T**).

13. Ensemble formé d'un terminal communicant portable (**T**) équipé de moyens (**C**) de traitement et d'acquisition d'images au travers d'au moins un système optique (**O**) et d'un accessoire (**1**) selon l'une des revendications 1 à 12 fixé sur le terminal communicant (**T**) de manière que la fenêtre d'acquisition (**5**) soit disposée en relation avec le système optique (**O**) du terminal communicant (**T**).

14. Ensemble selon la revendication 13, **caractérisé en ce qu'**il est adapté pour assurer la lecture de marquage et/ou l'acquisition de caractéristiques géométriques et/ou physiques sur un sujet placé à une distance du système optique inférieure à 50 mm et, de préférence, inférieure à 30 mm et, de préférence, comprise entre 5 mm et 20 mm.

## Patentansprüche

1. Zubehör für ein tragbares kommunizierendes Endgerät (T), das mit Mitteln (C) zur Verarbeitung und Aufnahme von Bildern durch wenigstens ein optisches System (O) ausgestattet ist, **dadurch gekennzeichnet, dass** es einen Körper (2) umfasst, der eine Aufnahmeaußenseite (3) für das tragbare kommunizierende Endgerät (T) und eine Anlageaußenseite (7), welche von der Aufnahmeseite (3) abgewandt ist, aufweist, wobei der Körper (2) umfasst:
- Mittel (4) zum Befestigen des Körpers (2) an dem kommunizierenden Endgerät (T),
- eine Aufnahmeröhre (6), die in dem Körper (2) angeordnet ist, um entsprechend dem Querschnitt der Aufnahmeröhre (6) ein Aufnahmefenster (5) zu begrenzen, wobei die Aufnahmeröhre (6) im Bereich der Aufnahmeseite (3) ein in Verbindung mit dem optischen System (O) platziertes erstes Ende aufweist, wobei die Aufnahmeröhre (6) ein zweites Ende aufweist, das im Bereich der Anlageseite (7) oder in einer bestimmten Höhe der Röhre gelegen und dazu bestimmt ist, in Verbindung mit einem Bereich zur Aufnahme (R) eines Gegenstands (S), welcher Gegenstand einer Bildaufnahme sein soll, platziert zu werden, sowie Mittel (10), die im Bereich von einer der Wände der Aufnahmeröhre (6) platziert sind, um eine Beleuchtung zu konditionieren, welche den Aufnahmebereich (R) beleuchtet, der innerhalb des Aufnahmefeldes des optischen Systems durch das Aufnahmefenster (5) gelegen ist,
- Mittel zur optischen Einstellung (20), die dazu bestimmt sind, mit dem optischen System des kommunizierenden Endgerätes zusammenzuwirken.

2. Zubehör nach Anspruch 1, **dadurch gekennzeichnet, dass** die Mittel (10) zum Konditionieren der Beleuchtung wenigstens einen von der Aufnahmeröhre (6) aufgewiesenen Durchgang für die von der Umgebung außerhalb des Zubehörs kommenden Lichtstrahlen umfassen.

3. Zubehör nach Anspruch 1, **dadurch gekennzeichnet, dass** es Versorgungs-(12) und Steuermittel (14) für die von dem Zubehör getragenen Mittel zum Konditionieren der Beleuchtung (10) umfasst.

4. Zubehör nach Anspruch 3, **dadurch gekennzeichnet, dass** die Mittel zur Versorgung (12) der Mittel zum Konditionieren einer Beleuchtung (10) wenigstens einen Akkumulator (13) und/oder eine Batterie umfassen.

5. Zubehör nach Anspruch 1, **dadurch gekennzeichnet, dass** die Mittel zur optischen Einstellung (20) eine variable Brennweite besitzen.

6. Zubehör nach Anspruch 1, **dadurch gekennzeichnet, dass** die Mittel zur optischen Einstellung (20) eine Linse mit variabler Brennweite umfassen.

7. Zubehör nach einem der Ansprüche 1 bis 6, **dadurch gekennzeichnet, dass** es Mittel zur Anlage (7, 22) an einem Gegenstand (S), welcher Gegenstand einer Aufnahme durch das Aufnahmefenster (5) sein soll, umfasst.

8. Zubehör nach einem der Ansprüche 2 bis 7, **dadurch gekennzeichnet, dass** es Mittel (25) umfasst, um einen Gegenstand (S), welcher Gegenstand einer Aufnahme sein soll, zwischen den Mitteln zum Konditionieren der Beleuchtung (10) und dem Aufnahmefenster (5) anzuordnen.

9. Zubehör nach einem der Ansprüche 2 bis 8, **dadurch gekennzeichnet, dass** die Mittel zum Konditionieren der Beleuchtung (10) wenigstens eine Lichtquelle (11) sowie Mittel (21) zum Führen (2) oder Streuen des durch die Lichtquelle ausgesandten Lichts umfassen.

10. Zubehör nach Anspruch 9, **dadurch gekennzeichnet, dass** die Mittel zum Führen (21) des Lichts dazu ausgelegt sind, Lichtstrahlen (12) auszusenden, die den Aufnahmebereich in einer Richtung im Wesentlichen parallel zu einer optischen Achse Δ oder Brennachse des optischen Systems (O) des kommunizierenden Endgerätes (T) beleuchten.

11. Zubehör nach einem der Ansprüche 1 bis 9, **dadurch gekennzeichnet, dass** die Mitteln zum Führen (21) des Lichts dazu ausgelegt sind, Lichtstrahlen (15) auszusenden, die den Aufnahmebereich in einer Richtung schräg oder senkrecht zu einer optischen Achse Δ oder Brennachse des optischen Systems (O) des kommunizierenden Endgerätes (T) beleuchten.

12. Zubehör nach einem der Ansprüche 1 bis 11, **dadurch gekennzeichnet, dass** es wenigstens eine Schnittstelle (26) zum Anschließen an das kommunizierende Endgerät (T) umfasst.

13. Anordnung, bestehend aus einem tragbaren kommunizierenden Endgerät (T), das mit Mitteln (C) zur Verarbeitung und Aufnahme von Bildern durch wenigstens ein optisches System (O) und mit einem Zubehör (1) nach einem der Ansprüche 1 bis 12 ausgestattet ist, das an dem kommunizierenden Endgerät (T) derart befestigt ist, dass das Aufnahmefenster (5) in Verbindung mit dem optischen System (O) des kommunizierenden Endgerätes (T) angeordnet ist.

14. Anordnung nach Anspruch 13, **dadurch gekennzeichnet, dass** sie dazu ausgelegt ist, das Lesen von Markierungen und/oder die Erfassung von geometrischen und/oder physikalischen Merkmalen an einem Gegenstand sicherzustellen, der in einem Abstand von dem optischen System von weniger als 50 mm und vorzugsweise weniger als 30 mm und bevorzugt zwischen 5 mm und 20 mm platziert ist.

## Claims

1. An accessory for a portable communicating terminal (**T**) fitted out with means (**C**) for processing and acquiring images through at least one optical system (**O**), the accessory being **characterized in that** it comprises a body (**2**) having an external receiving face (**3**) for receiving the portable communicating terminal (**T**) and an external pressing face (**7**) which is located opposite the receiving face (**3**), the body (**2**) comprising:
■ means (**4**) for attachment of the body (**2**) onto the communicating terminal (**T**);
■ an acquisition tube (**6**) that is provided in the body (**2**) to delimit an acquisition window (**5**) along the section of the acquisition tube (**6**), which tube (**6**) has at the receiving face (**3**), a first end which is placed in relationship with the optical system (**O**), the acquisition tube (**6**) having a second end located at the pressing face (**7**) or at a determined level of the tube which is intended to be placed in relationship with an acquisition region (**R**) of a subject (**S**) which is to be the object of an acquisition of image and means (**10**) that are placed at one of the walls of the acquisition tube (**6**) so as to illuminate the acquisition region (**R**) included in the field of acquisition of the optical system through the acquisition window (**5**); and
■ optical adjustment means (**20**) intended to cooperate with the optical system of the communicating terminal.

2. An accessory according to claim 1, **characterized in that** the illumination means (**10**) comprise at least one channel presented by the acquisition tube (**6**), for the light rays coming from the accessory's external environment.

3. An accessory according to claim 1, **characterized in that** it comprises means (**12,14**) for powering and controlling the illumination means (**10**) borne by the accessory.

4. An accessory according to claim 3, **characterized in that** the means (**12**) for powering the illumination means (**10**) comprise at least one accumulator (**13**) and/or one electric battery.

5. An accessory according to claim 1, **characterized in that** the optical adjustment means (**20**) have a variable focal distance.

6. An accessory according to claim 1, **characterized in that** the optical adjustment means (**20**) comprise a lens with a variable focal length.

7. An accessory according to any one of claims 1 to 6, **characterized in that** it comprises means (**7,22**) for pressing on a subject (**S**) which is to be the object of an acquisition through the acquisition window (**5**).

8. An accessory according to any one of claims 2 to 7, **characterized in that** it comprises means (**25**) for interposing a subject (**S**) which is to be the object of an acquisition, between the illumination means (**10**) and the acquisition window (**5**).

9. An accessory according to any one of claims 2 to 8, **characterized in that** the illumination means (**10**) comprise at least one light source (**11**) and means (**21**) for guiding (**2**) or diffusing light emitted by the light source.

10. An accessory according to claim 9, **characterized in that** the means (**21**) for guiding the light are adapted so as to emit light rays (**12**) illuminating the acquisition region along a direction substantially parallel to an optical axis Δ or a focal axis of the optical system (**O**) of the communicating terminal (**T**).

11. An accessory according to any one of claims 1 to 9, **characterized in that** the means (**21**) for guiding the light are adapted so as to emit light rays (**15**) illuminating the acquisition region along a direction oblique or perpendicular to an optical axis Δ or a focal axis of the optical system (**O**) of the communicating terminal (**T**).

12. An accessory according to any one of claims 1 to 11, **characterized in that** it comprises at least one interface (**26**) for connection to the communicating terminal (**T**).

13. An assembly formed with a portable communicating terminal (**T**) fitted out for means (**C**) for processing and acquiring images through at least one optical system (**O**) and with an accessory (**1**) according to any one of claims 1 to 12 attached onto the communicating terminal (**T**) so that the acquisition window (**5**) is positioned in a relationship with the optical system (**O**) of the communicating terminal (**T**).

14. An assembly according to claim 13, **characterized in that** it is adapted in order to provide reading of a marking and/or acquisition of geometrical and/or physical features on a subject placed at a distance from the optical system of less than 50 mm and, preferably, less than 30 mm, and preferably, between 5 mm and 20 mm.
